# EUROPÄISCHE PATENTSCHRIFT

(11) **EP 1 129 836 B1**
(45) Veröffentlichungstag und Bekanntmachung des Hinweises auf die Patenterteilung: **14.07.2004**
(21) Anmeldenummer: 01103208.3
(22) Anmeldetag: 12.02.2001
(51) Int. Cl.: B29C 45/00, B29C 47/00

(54) **Bauteil aus einem Trägerwerkstoff und einer Zumischung**
Part comprising a matrix and an admixture
Pièce comportant une matrice et un adjuvant

(30) Priorität: 03.03.2000 DE 20003902 U
(43) Veröffentlichungstag der Anmeldung: 05.09.2001
(73) Patentinhaber: Möller Plast GmbH, 33649 Bielefeld (DE)
(72) Erfinder: Beckmann, Friedhelm, Dipl.-Ing, 32120 Hiddenhausen (DE)
(74) Vertreter: Schirmer, Siegfried, Dipl.-Ing.

(56) Entgegenhaltungen:
- EP-A- 0 587 078
- WO-A-96/13368
- DE-A- 4 336 627
- DE-A- 19 852 036
- DE-C- 19 705 280
- US-A- 5 663 216
- COLBERG M ET AL: "SPRITZGIESSEN NATURFASERVERSTÄRKTER KUNSTSTOFFE" KUNSTSTOFFE,DE,CARL HANSER VERLAG. MUNCHEN, Bd. 87, Nr. 12, Dezember 1997 (1997-12), Seiten 1780-1782, XP000729793 ISSN: 0023-5563
- KARMAKER A C ET AL: "INJECTION MOLDING OF POLYPROPYLENE REINFORCED WITH SHORT JUTE FIBERS" JOURNAL OF APPLIED POLYMER SCIENCE,US,JOHN WILEY AND SONS INC. NEW YORK, Bd. 62, Nr. 8, 21. November 1996 (1996-11-21), Seiten 1147-1151, XP000682927 ISSN: 0021-8995

## Beschreibung

Die Erfindung betrifft ein Bauteil aus einem Trägerwerkstoff und einer Zumischung, insbesondere hergestellt im Spritzgieß- oder Extrusionsverfahren.

Zur Gewichtsreduzierung finden Werkstoffe Verwendung, die aufgrund ihrer Eigenschaften einen durch verschiedene Ursachen auftretenden Geräuschpegel deutlich reduzieren. Hierfür werden bevorzugt Matten eingesetzt, die verpreßt sind und den Schall aufgrund einer offenen Gefügestruktur absorbieren und somit die akustischen Rahmenbedingungen positiv beeinflussen.

Bauteile aus thermoplastischen Werkstoffen, die im Spritzgieß- oder Extrusionsverfahren hergestellt sind und an die aufgrund einer Trägerfunktion eine bestimmte Bauteilsteifigkeit vorausgesetzt wird, weisen wegen ihrer Grundeigenschaften keine günstigen akustischen Eigenschaften auf.

Die Herstellung eines solchen Bauteils ist zum Beispiel in der DE-A-198 52 036 offenbart. Gemäß dem bekannten Verfahren wird ein faserverstärkter Kunststoff-Werkstoff aus einem thermoplastischen oder thermoelastischen Polymer oder Polymer-Blend mit wenigstens einem natürlichen Polymer und einer Zumischung von Naturfasern hergestellt.

Der Erfindung liegt die Aufgabe zugrunde, die bekannten Bauteile in ihren akustischen Eigenschaften zu verbessern und neue Einsatzgebiete zu eröffnen, in denen die akustischen Rahmenbedingungen das Einsatzgebiet dieser Werkstoffe wesentlich erweitern.

Erfindungsgemäß wird diese Aufgabe durch die Verwendung von thermoplastischen Werkstoffen als Trägerwerkstoff und einer Zumischung von Schäben gelöst. Bei einer Altemativlösung besteht das Bauteil aus einem Trägerwerkstoff auf biologischer und/oder synthetischer Basis und einer Zumischung von Schäben. Vorteilhafterweise sind die Schäben in einer Konzentration von 10 bis 80% Gewichtsanteil zugemischt. Eine weitere Steigerung der akustischen Eigenschaften ist dadurch gegeben, daß der Trägerwerkstoff durch chemische und/oder physikalische Treibmittel aufgeschäumt ist. Außer einer Verbesserung der akustischen Eigenschaften ist hierbei eine deutliche Gewichtsreduzierung erreichbar.

## Patentansprüche

1. Bauteil aus thermoplastischen Werkstoffen als Trägerwerkstoff und aus einer Zumischung, insbesondere hergestellt im Spritzgieß- oder Extrusionsverfahren, **gekennzeichnet durch** eine Zumischung von Schäben.

2. Bauteil nach Anspruch 1, **dadurch gekennzeichnet, daß** der Trägerwerkstoff ein Werkstoff auf biologischer und/oder synthetischer Basis ist.

3. Bauteil nach Anspruch 1 oder 2, **dadurch gekennzeichnet, daß** die Schäben in einer Konzentration von 10 bis 80% Gewichtsanteil zugemischt sind.

4. Bauteil nach einem der Ansprüche 1 bis 3, **dadurch gekennzeichnet, daß** der Trägerwerkstoff durch chemische und/oder physikalische Treibmittel aufgeschäumt ist.

## Claims

1. Component consisting of thermoplastic materials as support material and of an admixture, in particular produced in an injection-moulding process or extrusion process, **characterised by** an admixture of shives.

2. Component according to claim 1, **characterised in that** the support material is a material on a biological and/or synthetic base.

3. Component according to claim 1 or 2, **characterised in that** the shives are admixed in a concentration of 10 to 80% proportion by weight.

4. Component according to one of claims 1 to 3, **characterised in that** the support material is foamed by a chemical and/or physical foaming agent.

## Revendications

1. Pièce composée de matériaux thermoplastiques servant de matériau de base et d'un adjuvant, fabriquée notamment par un procédé de moulage par injection ou par un procédé d'extrusion,
**caractérisée par**
un adjuvant de chènevottes.

2. Pièce selon la revendication 1,
**caractérisée en ce que**
le matériau de base est une matière reposant sur une base biologique et/ou synthétique.

3. Pièce selon la revendication 1 ou 2,
**caractérisée en ce que**
les chènevottes sont ajoutées à une concentration comprise entre 10 et 80 % en part de poids.

4. Pièce selon l'une quelconque des revendications 1 à 3,
**caractérisée en ce que**
le matériau de base mousse grâce à un produit moussant chimique et/ou physique.
